# EUROPEAN PATENT SPECIFICATION

(11) **EP 3 311 006 B1**
(45) Date of publication and mention of the grant of the patent: **05.02.2020**
(21) Application number: 16722849.3
(22) Date of filing: 06.05.2016
(51) Int. Cl.: F01D 25/24

(54) **ASSEMBLY/DISASSEMBLY APPARATUS FOR FLANGED MECHANICAL DEVICE AND ASSEMBLY/DISASSEMBLY METHOD FOR FLANGED MECHANICAL DEVICES**
MONTAGE-/DEMONTAGEVORRICHTUNG FÜR GEFLANSCHTE MECHANISCHE VORRICHTUNG UND MONTAGE-/DEMONTAGEVERFAHREN FÜR GEFLANSCHTE MECHANISCHE VORRICHTUNGEN
APPAREIL D'ASSEMBLAGE/DÉSASSEMBLAGE POUR DISPOSITIF MÉCANIQUE À BRIDE ET PROCÉDÉ D'ASSEMBLAGE/DÉSASSEMBLAGE POUR DISPOSITIFS MÉCANIQUES À BRIDE

(30) Priority: 07.05.2015 IT MI20150647
(43) Date of publication of application: 25.04.2018
(73) Proprietor: Nuovo Pignone Tecnologie - S.r.l., 50127 Florence (IT)
(72) Inventor: GIAMMARCHI, Alessandro Giammarchi, 50127 Florence (IT)
(74) Representative: BRP Renaud & Partner mbB Rechtsanwälte Patentanwälte Steuerberater
(86) International application number: PCT/EP2016/060184
(87) International publication number: WO 2016/198216

(56) References cited:
- EP-A2- 1 752 409
- US-A1- 2013 147 188

## Description

### TECHNICAL FIELD

Embodiments of the subject matter disclosed herein correspond to assembly/disassembly apparatuses for flanged mechanical devices, preferably rotary mechanical devices such turbo-machines or also piping, still more preferably for gas turbines or similar and method for assembling a flanged mechanical device, particularly a turbo-machine, still more particularly a gas turbines or similar.

### BACKGROUND ART

EP 1 752 409 A2 discloses an assembly apparatus with four rails. One or more carriages are suspended from a pathway and capable of maintaining a workload in place.

Mechanical device parts coupling is often obtained by means of flanges provided on two parts which need to be joined together.

This is the case, for example, of rotary mechanical devices, which are often provided by a substantially cylindrical casing housing operative components of the device itself; the casing is often made in two, three or more substantially cylindrical segments, each one provided at its free ends with flanges which, in an operating condition, are coupled together so as to form the complete casing, by means of bolts or similar mechanical coupling devices.

Another non limiting example are pipings: each pipe segment is provided by flanges useful for connecting it to another pipe segment or to an operative device (valves, pumps, compressors or similar) that is, on its turn, provided by a flange.

Substantially, the same applies in the field of turbo-machines, preferably gas turbines, compressors or similar, that are usually provided by different modules, each provided by its own shaft (either driving or driven depending on the machine kind).

For example in a gas turbine having an high and a low pressure modules, each module is provided by its own shaft; such modules are pre-assembled each by each and then assembled together so as to form the main part of the rotary mechanical device itself.

The external casing of each module is substantially cylindrical; during the assembly of the turbine, the two casing must be coupled together; usually those casings are provided, to this extent, with coupling flanges.

It has to be reminded that there is a strong need for having the two shafts perfectly aligned and that every module, during the assembly phase, must be moved and properly positioned with respect to the other one; those operations are rendered even more difficult considering the weight of each module.

The same problem arises also when separation of the modules is needed, for example for maintenance purposes.

To this extent embedded lifting points are usually provided on each casing of the modules; during the operations a sliding of the two modules occurs.

Another limit is related to the fact that additional features on the turbo-machine structure (lugs, gibbs, etc) must be provided, and the casing must therefore be designed to this extent; it may occurs that in some cases those additional features can compromise a design related to pure performance aspects.

In order to fully understand difficulty that arises during an assembly/disassembly phase, a brief explanation will be given herein below.

In the case of a gas turbine, provided by two modules, the latter are cylindrical; when they need to be disassembled (for example for dismantling the turbine and reassembling the same in another place, or for maintenance purposes), starting from the mounted turbine, it is necessary first to install low jack support below one of the modules; then one module is moved away from the other so as to free up the mating surface between the two modules, usually a coupling flange; a front support is then installed the flange, thanks -for example- to a lifting crane or similar.

It is then possible to remove the module on which the support has been mounted.

The same procedure is repeated (in the opposite way) when an assembly of the rotary mechanical device is needed; the relevant limits of this procedure are now well apparent, and are -briefly- related to the need of having two heavy equipment suspended, to the relative high cost and time needed for completion of assembly/disassembly operation and to the relative complex and risky operation to be performed in site.

### SUMMARY

Therefore there is a general need for an improved apparatus and method for assembly/disassembly of a flanged mechanical device, such for example turbo-machines, still more preferably turbines or gas turbines casings.

An important idea is to provide an apparatus and a method able to simultaneously engaging a first flange of a first casing and, while disengaging said first flange engaging simultaneously a second flange of a second casing.

First embodiments of the subject matter disclosed herein correspond to an assembly/disassembly apparatus for flanged mechanical device wherein the apparatus comprises:
- a main body provided with a rear abutment sector having at least a seat,
- a coupling pin removably housed in part in the seat and extending from the seat in a first direction,
- grabbing device coupled to said main body,
- an engagement mechanism provided at least by a first and a second retaining arms, said first and second retaining arm being movable together between a first and a second positions, in which, in said first position the first retaining arm faces the rear abutment sector while in said second position the second retaining arm faces the rear abutment sector.

Second embodiments of the subject matter disclosed herein correspond to an assembly method for flanged mechanical devices.

Third embodiment of the subject matter disclosed herein correspond to a disassembly method for flanged mechanical devices.

In this way, either by the apparatus or the method herein described, it is possible to separate the two modules without the need of having the mating flange free.

At the same time, advantageously, the apparatus acts also as a support for transportation.

Therefore, there is no need of additional features on the machine structure (lugs, gibbs, etc) so the casings can be designed only with regard to performance aspects.

At the same time, advantageously, the apparatus acts also as a support point for module transportation/shipping or similar needs.

Moreover, the apparatus and method herein described, leaves free contact surface between two modules, and is able to guide such modules during the coupling phase eliminating the risk of damaging the inner components.

### BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:

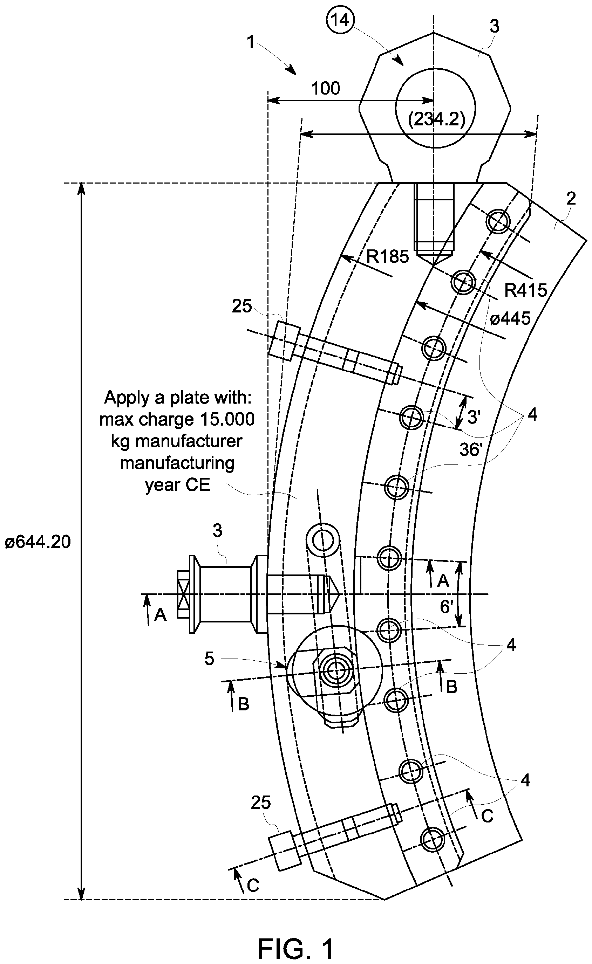

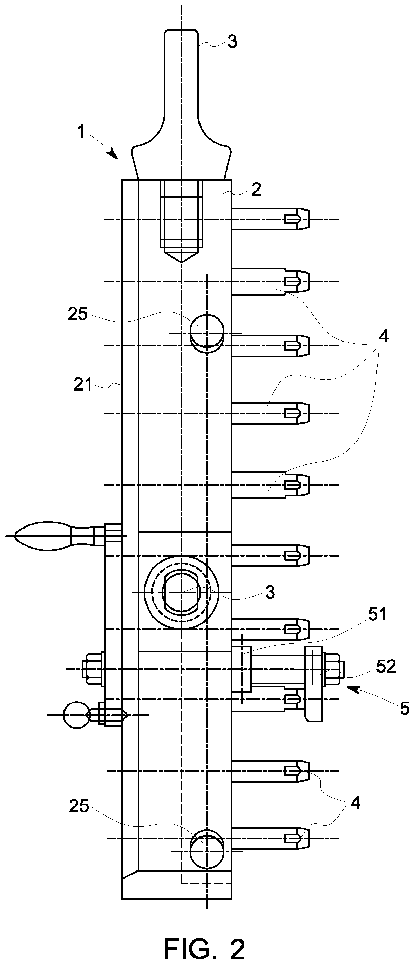

Fig. 1 and 2 show a plan and a lateral view of an exemplary embodiment of an apparatus for assembly/disassembly of flanged mechanical devices;

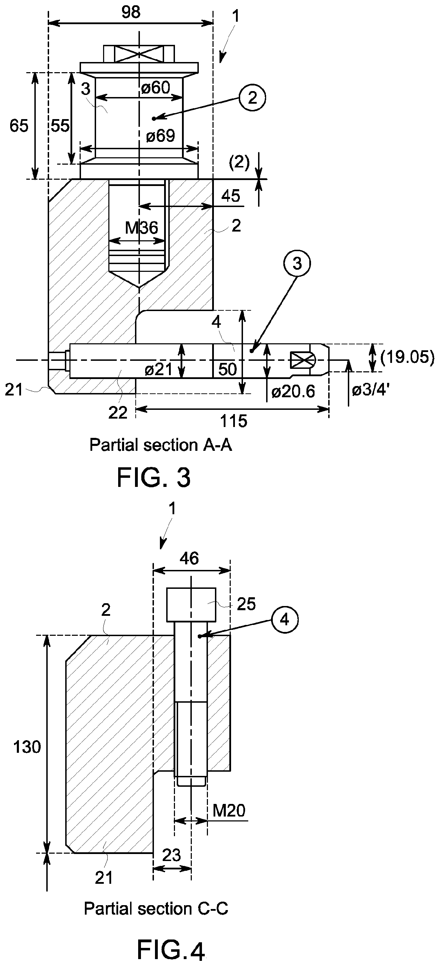

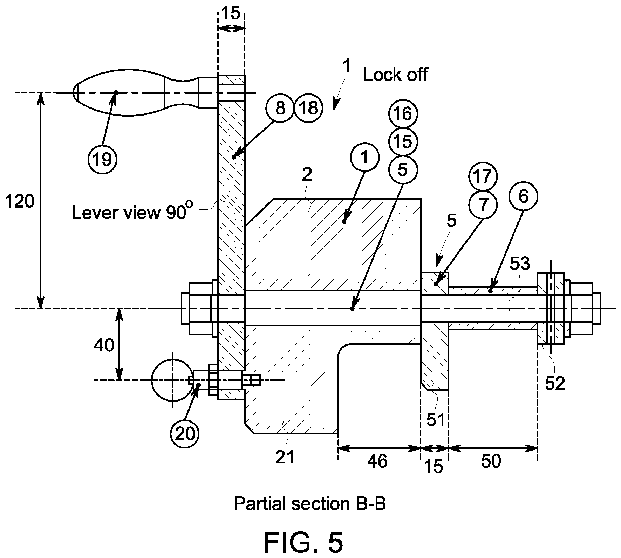

Fig. 3-5 show enlarged different sectional views of the apparatus of fig. 1, 2 corresponding to particulars of the latter;
Fig. 6 and 7 show a frontal and a lateral view of the apparatus of the preceding figures, in an operating condition;
Fig. 8-15 show, in a front and sectional view, different moment of an assembly phase of a flanged mechanical device, in which the apparatus of the preceding figures is used;
Fig. 16-17 show, in a sectional and front view, a detail of the apparatus of the preceding figures according to a first embodiment;
Fig. 18 show, in a sectional view, the detail the preceding figures in a second embodiment.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

One embodiment of an assembly/disassembly apparatus 1 will be described in the following with reference to the attached figures.

The apparatus 1 is especially useful for assembly/disassembly operations of flanged mechanical devices FMD, as will be better apparent when the method will be described, later on in this description.

In the attached drawings the exemplary flanged mechanical device FMD is a turbine, particularly a gas turbine, but, more in general, such a flanged mechanical device FMD can be also a piping component (pipe, valve, tank or other) without limiting both the method and the apparatus herein described and claimed.

In order to best understand such method, a brief description of the apparatus will be given hereinabove.

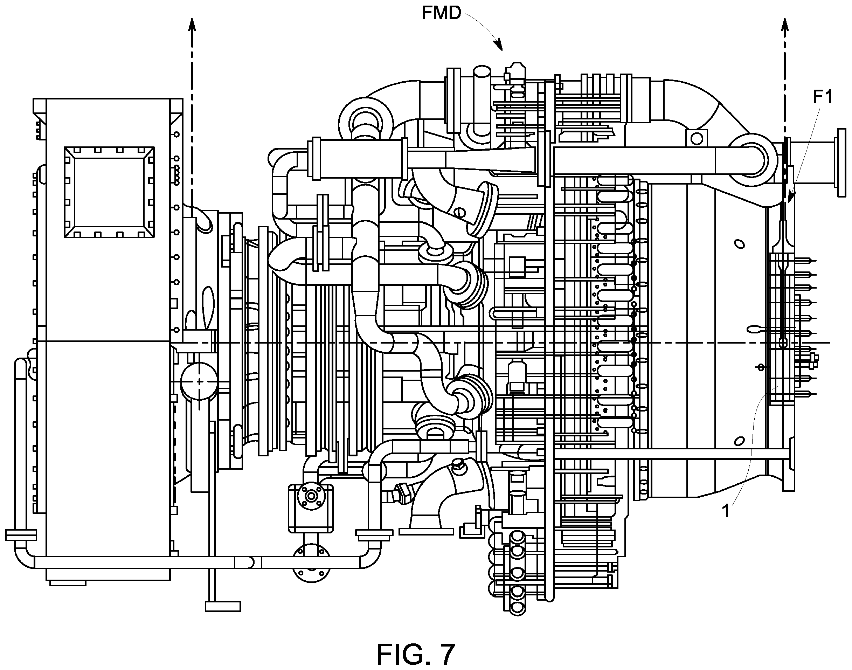

In a non-limiting example the apparatus 1 comprises a main body 2 provided with a rear abutment sector 21; preferably, when the flanges F1, F2 of the flanged mechanical devices are circular flanges (as in fig.7, 8-15), the main body 2 has substantially an arched shape; in case that the flanges are rectilinear, then the main body 2 will show a straight shape; in case that the flanges have different shape, then the main body 2 will be shaped in a corresponding manner, so as to embrace at least a portion of the flange F1, F2.

The main body is provided at least with a seat 22, in which is housed, in part, a coupling pin 4 which, on its turn, extends from the seat 22 in a first direction.

In the attached figures a plurality of coupling pin 4 and corresponding seat 22 are provided, but it must be understand that, in certain cases, also one pin 4 will be sufficient.

The main body is provided also with a grabbing device 3 coupled to said main body 2; the grabbing device can be provided in different form, as an example it can be in the form of an eyebolt, an arm, a bollard, a boom or similar.

In the attached figures two grabbing devices 3 are provided: one in the form of a bollard and the other in the form of an eyebolt; it must be stressed that different shapes and number of grabbing devices can be provided in other embodiments.

The grabbing device 3 primary function is to serve as a grabbing point for engaging the apparatus 1 with suitable lifting devices (ex. bridge crane, supports or similar).

As can be easily seen in the figures, the apparatus 1 further comprises an engagement mechanism 5 provided at least by a first 51 and a second 52 retaining arm.

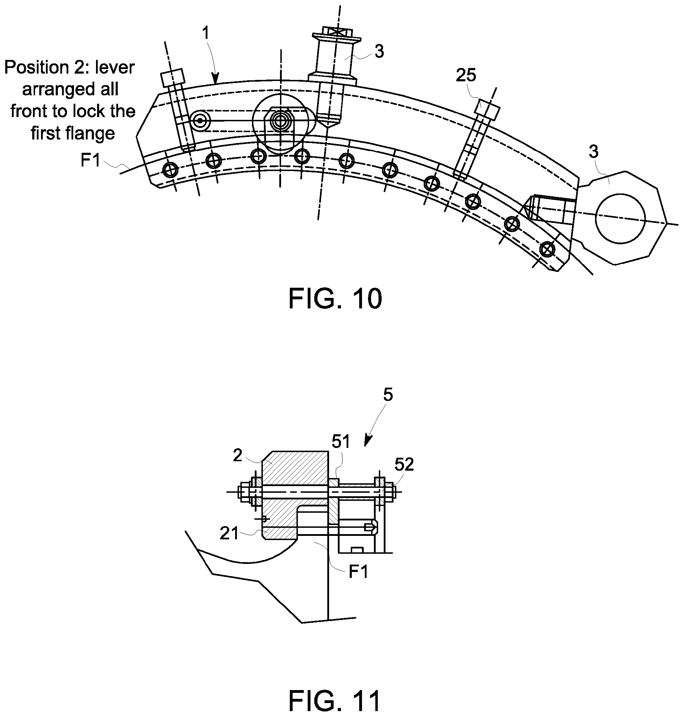

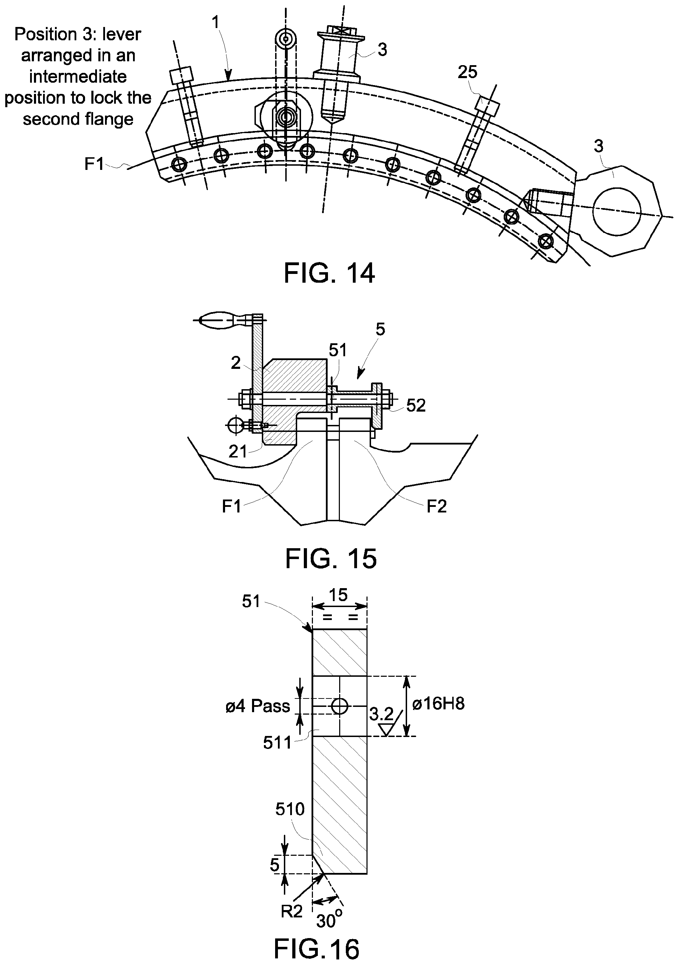

Such retaining arms 51, 52 are movable together between a first and a second positions, in which:
in the first position (as in fig. 10,11), the first retaining arm 51 faces the rear abutment sector 21, so as to define an U-shaped seat in which a first flange F1 can be engaged and retained between the rear abutment sector 21 and the first retaining arm 51
in the second position (as in fig. 14,15) the second 52 retaining arm 52 faces rear abutment sector 21, so as to define an U-shaped seat in which the first and a second flange F1, F2 - parallel each other- can be engaged and retained together between the rear abutment sector 21 and the second retaining arm 52.

The two retaining arm 51, 52 are spaced each other in the first direction so that one (51) is near to the rear abutment sector 21, while the other (52) is remote from the latter; in this way the two U-shaped seat defined in the first and second position are different: the first seat has substantially the thickness of the flange F1, while the second has the thickness of at least both the first and second flange F1, F2 plus an additional working thickness which will be understood better in the following.

Therefore, by moving the arms 51,52 together between the first and second position and vice versa, is possible to engage one or two flanges F1, F2 in the space or seat between the facing arm (depending on the first or second position) and the rear abutment sector 21: when the engagement mechanism 5 is in the first position, then only one flange F1 can be engaged in the space between the arm 51 and the rear abutment sector 21, while when the engagement mechanism 5 is in the second position, then both flanges F1 and F2 can be engaged in the space between the arm 52 and the rear abutment sector 21.

For what concern the pin 4, it can be either fixed in the seat 22 or removably housed in the same; in the latter case different solutions are available, for example both the pin 4 and the seat 22 can be provided with threads; preferably the coupling pin 4 is removably housed in part in the seat 22.

The pin 4 is adapted to be inserted in the holes or seats usually provided on the flanges F1, F2; those holes or seats are normally used for housing couplings (such as bolts or similar) that retains the two flanges F1, F2 in the coupled condition; therefore, diameter and length of the pin 4 can vary according to the circumstances.

The pin 4 extend from the body 2 at least from a face of the latter which is on the opposite side that the one provided by the rear abutment sector: in this way, when engaged by the pins 4 the flange F1 rest on said rear abutment sector 22.

In the preferred embodiment shown, the engagement mechanism 5 comprises a coupling shaft 53 rotatable coupled with said main body and extending from the latter in the first direction (parallel to the pin 4).

The first 51 and second 52 retaining arms are fixedly coupled with the coupling shaft 53 and extends from the latter in a radial direction at a predetermined distance each other.

Such permanent (or fixed) coupling between the shaft 53 and the arms 51,52 can be obtained in different ways: in one example the two arms 51, 52 are provided by a mechanical shape coupling, while in other embodiments, they are monolithic with the shaft 53, tough other permanent coupling means may be provided according to the circumstances.

Preferably, as depicted in the non-limiting example of the attached figures, the engagement mechanism 5 is a camshaft mechanism, said first 51 and second 52 retaining arms being cams, preferably plate-like cams, as shown in the details of fig. 16-18 which shows different embodiment of the arm 51, the second arm 52 being analogous.

Preferably each arm 51, 51' is made by a plate having one hole 511 for coupling with the shaft 53 and one shaped edge 510, 510', which is preferably provided at least by an inclined coupling surface which will help in engaging the flange F1, F2.

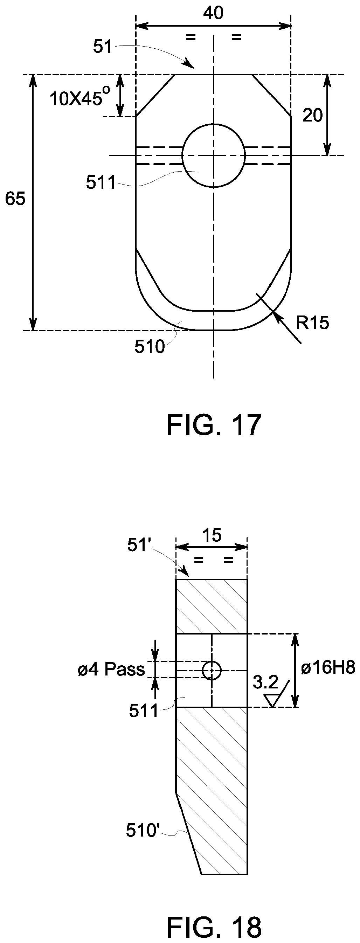

As shown in the two different embodiment 51, 51' of fig. 16 and 18, the inclination angle of the inclined coupling surface and its extension can vary according to the circumstances.

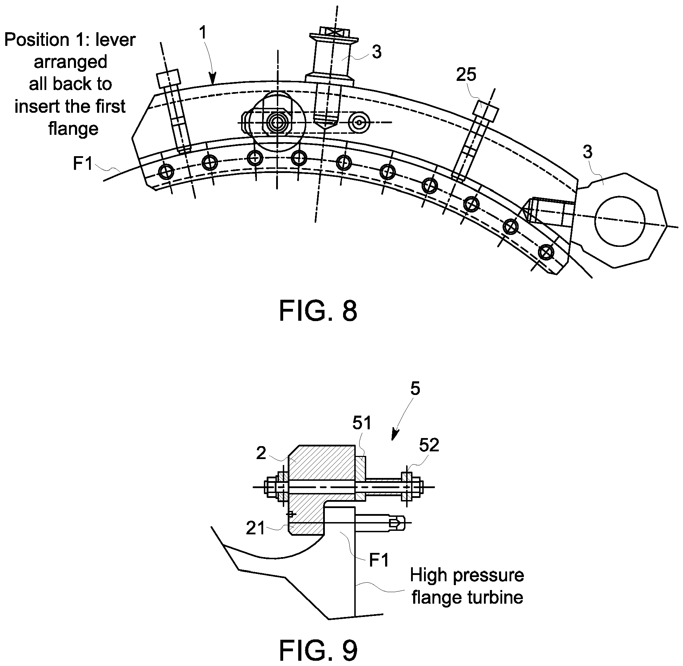

Reverting back to the shaft 53, the latter is preferably rotatably coupled with the body 2, so that the first and second position above described can be reached through a rotation of the shaft 53 itself, which moves the first and second arm 51, 52 to face the rear abutment sector 21, as can be best seen in fig. 8-15 which shows an engagement phase in different moments:
in fig. 8,9 the first flange F1 is engaged by the pins 4 of the apparatus 1 and both the first and second arm 51, 52 are in a non-engaged starting position, in which they do not face the rear abutment sector 22 and do not define any seat with the latter;
in fig. 10,11 the first flange F1, engaged by the pins 4 of the apparatus 1, is blocked between the first arm 51 and the rear abutment sector 22, in the U-shaped seat created by moving the first arm 51 in the first position, in which it face the rear abutment sector 22; as can be seen the pin 4 extends substantially until the second arm 52: in this condition the portion of the pin 4 free from the engagement with the flange F1 is free for an engagement with the flange F2 and the second arm 52 does not interfere with such flange F2 during the insertion phase on the pin 4;

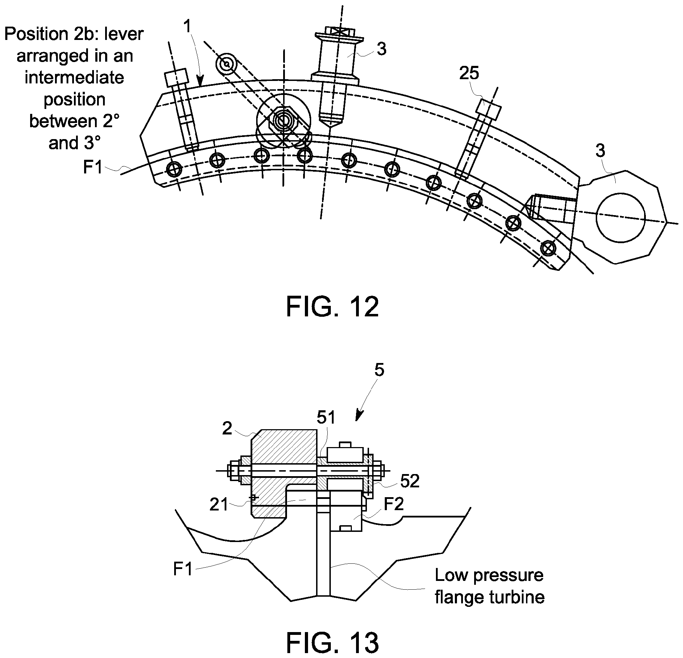

in fig. 12,13 the pin 4 is engaged with the flange F2 and it is interesting to notice the safety position reached by arms 51, 52: in this safety position both flanges F1 and F2 are engaged respectively by arms 51 and 52, so that any disengagement is prevented; this is possible (in this non limiting embodiment) by providing the two arms 51, 52 oriented by 90° each other, to that in the safety position they are both in contact with the two flanges and only partially facing the rear abutment sector 22;
in fig. 14, 15 the shaft 53 is rotated to the second position, in which the second arm 52 faces the rear abutment sector 22, the first arm 51 being far removed; in this position the second arm 52 and the rear abutment sector 22 defines the U-shaped seat in which both the first and second flange F1, F2 are housed; coupling of the two can then be effected through bolts or similar.

It has to be noted that rotation, or more in general, movement, between the two positions (and optionally the safety position) can be achieved in many ways; preferably, in order to reduce weight and costs of the apparatus, the engagement mechanism 5 is manually operable, for example by means of a manually operable lever attached to the shaft, as shown; such a lever can be provided on the side of the shaft 53 not provided by the arms 51,52, as shown; in another -not shown- embodiment- the manually operable lever (or any equivalent) is provided on the opposite side of the shaft 53 (near to the arm 52 for example).

A first method herein described is an assembly method for flanged mechanical devices, while another method is a disassembly method.

Both the methods are used for assembly (or disassembly) mechanical devices comprising a first part C1 provided at least by a first flange F1 and a second part C2 provided at least by a second flange F2; when assembled, the two flanges F1, F2 are intended to be coupled by coupling, such for example bolts housed in dedicated holes (or seats) of the flanges F1, F2.

Starting with a brief description of the assembly method, as shown in fig. 8-15 in different moments, in general it comprises the step of:
A1. engaging a first flange F1 of the first part C1 of said flanged mechanical devices by means of an assembly/disassembly apparatus 1 provided at least by a first 51 and a second 52 retaining arms, by blocking the apparatus 1 on said first flange F1 at least by means of said first retaining arm 51 (fig. 10-11),
B1. moving a second flange F2 of a second casing C1 of said flanged mechanical devices toward said first flange F1,
C1. simultaneously disengaging said first 51 retaining arm from said first flange F1 and engaging said second flange F2 with said second 52 retaining arm, while keeping said first arm 51 in contact in contact with said first flange F1 until at least said second arm 52 come into contact with said second flange F2 (fig. 12,13 and 14,15).

The step C1, particularly, assure that no unexpected movement or disengagement between the parts occurs, thus improving also safety and operability of the assembly operation.

In a preferred embodiment, the step A1 provides for blocking the apparatus 1 on said first flange F1 by engaging said first flange F1 between the first retaining arm 51 and a rear abutment sector 21 of the apparatus 1 and by inserting at least one coupling pin 4 of the apparatus in a corresponding seat provided on said first flange F1.

While the retaining arm 51 and the rear abutment sector 21 prevent axial movement of the flange F1, the coupling pin 4 prevents radial movement and, when engaged in the second flange F2, it serves also as a guide during the assembly operation, avoiding misplacement and assuring for a correct coupling.

In a preferred embodiment, the step B1 provides for moving a second flange F2 substantially in an abutment condition against said first retaining arm 51; then the step C1 can be performed and comprises an axial movement of the second flange F2 against the first flange F1, until an abutment between the two has been reached and the coupling can be perfected (ex. by bolts or similar).

Assembly of the flanges F1, F2, can be finalized by removing the pin 4 (and/or the entire apparatus 1) and preferably using additional bolts or similar for finalizing the coupling of the flanges.

It has to be noted that the grabbing device 3 serves for moving the device and/or lifting it (from the above or by a support) without the need of occupying the mating surface of the flanges, thereby obviating the above discussed limits of the known art solutions.

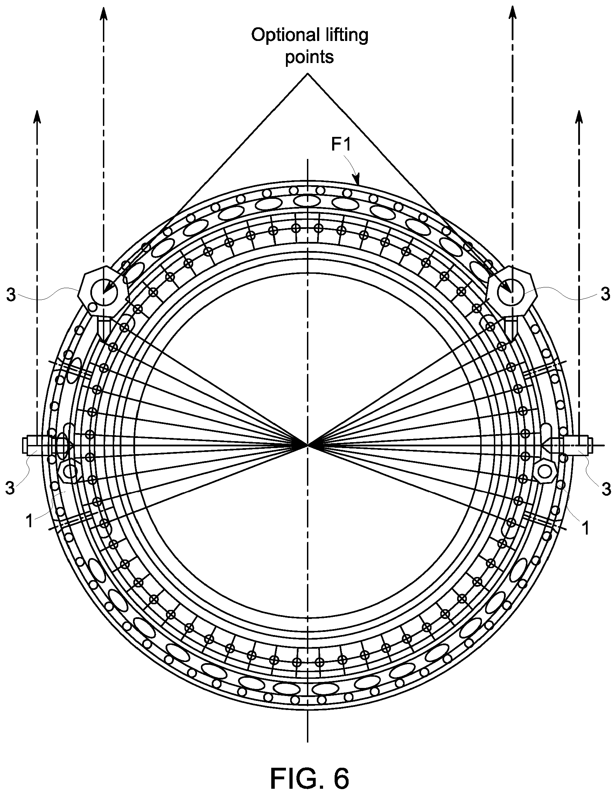

For particularly heavy mechanical devices, two or more apparatus 1 as already described can be used, as shown in the example of fig. 6 and 7, so to lift or suspend the Flanged mechanical device FMD on two opposite side of the latter.

When a disassembly of a mechanical flanged device FMD occurs, then it has to be considered that the first part C1 -provided at least by a first flange F1- and the second part C2 -provided at least by a second flange F2- are already in a coupled condition, for example by means of couplings (bots or similar) housed in respective holes (or seats) of the two flanges F1, F2.

Therefore, the disassembly method comprises the step of:
A2. engaging both the first flange F1 of the first part C1 and the second flange F2 of the second part C2 by means of an assembly/disassembly apparatus 1 provided at least by a first 51 and a second 52 retaining arms, by blocking the apparatus 1 on said first and second flange F1, F2 at least by means of said second retaining arm 52,
B2. removing the couplings (ex. bolts) between the first and second flange F1,F2, freeing at least one seat for each coupling in the first and in the second flange F1,F2 and inserting in said seat a pin 4 of the assembly/disassembly apparatus 1,
C2. substantially simultaneously disengaging said second 52 retaining arm from said second flange F2 and engaging said first flange F1 with said first 51 retaining arms, while keeping said second arm 52 in contact in contact with said second flange F2 until at least said first arm 51 come into contact with said first flange F1.

Preferably, the step A2 provides for blocking the apparatus 1 on said first and second coupled flanges F1, F2 by engaging said first and second flange F1,F2 between said second retaining arm 52 and a rear abutment sector 21 of said apparatus (1).

Optionally, those assembly and disassembly methods are intended to be operated by means of an apparatus 1, as above described.

## Claims

1. An assembly/disassembly apparatus (1) for flanged mechanical device wherein the apparatus comprises:
- a main body (2) provided with a rear abutment sector (21) having at least a seat (22),
- a coupling pin (4) housed in part in the seat (22) and extending from the seat (22) in a first direction,
- a grabbing device (3) coupled to said main body (2),
**characterised in that** an engagement mechanism (5) is provided at least by a first (51) and a second (52) retaining arm, said first (51) and second (52) retaining arms being movable together at least between a first and a second positions, in which, in said first position the first retaining arm (51) faces the rear abutment sector (21) while in said second position the second retaining arm (52) faces the rear abutment sector (21).

2. The assembly/disassembly apparatus (1) of the preceding claim, wherein said first (51) and a second (52) retaining arm, are movable together in a third safety position in which, the first retaining arm (51) partially faces the rear abutment sector (21) and the second retaining arm (52) partially faces the rear abutment sector (21).

3. The assembly/disassembly apparatus (1) of the claims 1 or 2, wherein the engagement mechanism (5) comprises a coupling shaft (53) rotatable coupled with said main body and extending from the latter in said first direction, substantially parallel to the coupling pin (4), said first (51) and second (52) retaining arms being fixedly coupled with said coupling shaft (53) and extending in a radial direction from the latter at a predetermined distance each other.

4. The assembly/disassembly apparatus (1) of the preceding claim, wherein the engagement mechanism (5) is a camshaft mechanism, said first (51) and second (52) retaining arms being cams.

5. The assembly/disassembly apparatus (1) of any one of the preceding claims, wherein said coupling pin (4) is removably housed in part in the seat (22).

6. The assembly/disassembly apparatus (1) of any one of the preceding claims, comprising a fixing device (25) provided on said main body (2) extending substantially perpendicular with respect to said coupling pin (4).

7. The assembly/disassembly apparatus (1) of any one of the preceding claims, in which said main body (2) is an arched body.

8. An assembly method for flanged mechanical devices comprising a first part (C1) provided at least by a first flange (F1) and a second part (C2) provided at least by a second flange (F2), the method comprising the step of
A1. engaging a first flange (F1) of the first part (C1) of said flanged mechanical devices by means of an assembly/disassembly apparatus (1) provided at least by a first (51) and a second (52) retaining arms, by blocking the apparatus (1) on said first flange (F1) at least by means of said first retaining arm (51),
B1. moving a second flange (F2) of a second casing (C1) of said flanged mechanical devices toward said first flange (F1)
C1. simultaneously disengaging said first (51) retaining arm from said first flange (F1) and engaging said second flange (F2) with said second (52) retaining arms, while keeping said first arm (51) in contact in contact with said first flange (F1) until at least said second arm (52) come into contact with said second flange (F2).

9. The assembly method of claim 8, wherein the step A1 provides for blocking the apparatus (1) on said first flange (F1) by engaging said first flange (F1) between said first retaining arm (51) and a rear abutment sector (21) of said apparatus (1) and by inserting at least one coupling pin (4) of the apparatus in a corresponding seat provided on said first flange (F1).

10. The assembly method of claim 8 or 9, wherein the step B1 provides for moving a second flange (F2) substantially in an abutment condition against said first retaining arm (51).

11. A disassembly method for flanged mechanical devices comprising a first part (C1) provided at least by a first flange (F1) and a second part (C2) provided at least by a second flange (F2), in the assembled condition said first and second flange (F1,F2) being in a coupled condition by means of couplings, the method comprising the step of
A2. engaging both the first flange (F1) of the first part (C1) and the second flange (F2) of the second part (C2) of said flanged mechanical devices by means of an assembly/disassembly apparatus (1) provided at least by a first (51) and a second (52) retaining arms, by blocking the apparatus (1) on said first and second flange (F1, F2) at least by means of said second retaining arm (52),
B2. removing said coupling between said first and second flange (F1, F2), freeing at least one seat for each coupling in the first and second flange (F1, F2) and inserting in said seat a pin (4) of the assembly/disassembly apparatus (1),
C2. substantially simultaneously disengaging said second (52) retaining arm from said second flange (F2) and engaging said first flange (F1) with said first (51) retaining arms, while keeping said second arm (52) in contact in contact with said second flange (F2) until at least said first arm (51) come into contact with said first flange (F1).

12. The disassembly method of claim 11, wherein the step A2 provides for blocking the apparatus (1) on said first and second coupled flanges F1, F2 by engaging said first and second flange (F1,F2) between said second retaining arm (52) and a rear abutment sector (21) of said apparatus (1).

13. The method of any of claims 8-12, wherein the method is operated at least in part through an assembly/disassembly apparatus (1) of any of claims 1-7.

## Patentansprüche

1. Montage-/Demontagevorrichtung (1) für eine geflanschte mechanische Vorrichtung, wobei die Vorrichtung umfasst:
- einen Hauptkörper (2), der mit einem hinteren Anschlagsektor (21) versehen ist, der mindestens einen Sitz (22) aufweist,
- einen Kupplungsstift (4), der teilweise in dem Sitz (22) untergebracht ist und sich von dem Sitz (22) in einer ersten Richtung erstreckt,
- eine mit dem Hauptkörper (2) gekoppelte Greifvorrichtung (3),
**dadurch gekennzeichnet, dass** ein Eingriffsmechanismus (5) zumindest durch einen ersten (51) und einen zweiten (52) Haltearm bereitgestellt wird, wobei der erste (51) und der zweite (52) Haltearm zumindest zwischen einer ersten und einer zweiten Stellung zusammen beweglich sind, wobei in der ersten Stellung der erste Haltearm (51) dem hinteren Anschlagsektor (21) zugewandt ist, während in der zweiten Stellung der zweite Haltearm (52) dem hinteren Anschlagsektor (21) zugewandt ist.

2. Montage-/Demontagevorrichtung (1) nach dem vorstehenden Anspruch, wobei der erste (51) und ein zweiter (52) Haltearm zusammen in einer dritten Sicherheitsstellung beweglich sind, in welcher der erste Haltearm (51) teilweise dem hinteren Anschlagsektor (21) zugewandt ist und der zweite Haltearm (52) teilweise dem hinteren Anschlagsektor (21) zugewandt ist.

3. Montage-/Demontagevorrichtung (1) nach den Ansprüchen 1 oder 2, wobei der Eingriffsmechanismus (5) eine mit dem Hauptkörper drehbar gekoppelte Kupplungswelle (53) umfasst, die sich von diesem aus in der ersten Richtung im Wesentlichen parallel zum Kupplungsstift (4) erstreckt, wobei der erste (51) und der zweite (52) Haltearm fest mit der Kupplungswelle (53) gekoppelt sind und sich von dieser aus in einer radialen Richtung in einem vorbestimmten Abstand zueinander erstrecken.

4. Montage-/Demontagevorrichtung (1) nach dem vorstehenden Anspruch, wobei der Eingriffsmechanismus (5) ein Nockenwellenmechanismus ist, wobei der erste (51) und der zweite (52) Haltearm Nocken sind.

5. Montage-/Demontagevorrichtung (1) nach einem der vorstehenden Ansprüche, wobei der Kupplungsstift (4) teilweise abnehmbar in dem Sitz (22) untergebracht ist.

6. Montage-/Demontagevorrichtung (1) nach einem der vorstehenden Ansprüche, umfassend eine an dem Hauptkörper (2) vorgesehene Befestigungsvorrichtung (25), die sich im Wesentlichen senkrecht zu dem Kupplungsstift (4) erstreckt.

7. Montage-/Demontagevorrichtung (1) nach einem der vorstehenden Ansprüche, wobei der Hauptkörper (2) ein gekrümmter Körper ist.

8. Montageverfahren für geflanschte mechanische Vorrichtungen, umfassend einen ersten Teil (C1), der zumindest durch einen ersten Flansch (F1) bereitgestellt wird, und einen zweiten Teil (C2), der zumindest durch einen zweiten Flansch (F2) bereitgestellt wird, wobei das Verfahren den Schritt umfasst aus
A1. Ineingriffbringen eines ersten Flansches (F1) des ersten Teils (C1) der geflanschten mechanischen Vorrichtungen mittels einer Montage-/Demontagevorrichtung (1), die zumindest durch einen ersten (51) und einen zweiten (52) Haltearm bereitgestellt wird, durch Blockieren der Vorrichtung (1) auf dem ersten Flansch (F1) zumindest mittels des ersten Haltearms (51),
B1. Bewegen eines zweiten Flansches (F2) eines zweiten Gehäuses (C1) der geflanschten mechanischen Vorrichtungen zu dem ersten Flansch (F1)
C1. gleichzeitig Lösen des ersten (51) Haltearms von dem ersten Flansch (F1) und Ineingriffbringen des zweiten Flansches (F2) mit den zweiten (52) Haltearmen, während der erste Arm (51) in Kontakt mit dem ersten Flansch (F1) gehalten wird, bis zumindest der zweite Arm (52) mit dem zweiten Flansch (F2) in Kontakt kommt.

9. Montageverfahren nach Anspruch 8, wobei der Schritt A1 das Blockieren der Vorrichtung (1) auf dem ersten Flansch (F1) vorsieht, indem der erste Flansch (F1) zwischen dem ersten Haltearm (51) und einem hinteren Anschlagsektor (21) der Vorrichtung (1) in Eingriff gebracht wird und mindestens ein Kupplungsstift (4) der Vorrichtung in einen entsprechenden Sitz eingesetzt wird, der auf dem ersten Flansch (F1) vorgesehen ist.

10. Montageverfahren nach Anspruch 8 oder 9, wobei der Schritt B1 das Bewegen eines zweiten Flansches (F2) im Wesentlichen in einem Anschlagzustand gegen den ersten Haltearm (51) vorsieht.

11. Demontageverfahren für geflanschte mechanische Vorrichtungen, umfassend einen ersten Teil (C1), der zumindest durch einen ersten Flansch (F1) bereitgestellt wird, und einen zweiten Teil (C2), der zumindest durch einen zweiten Flansch (F2) bereitgestellt wird, wobei sich der erste und zweite Flansch (F1, F2) im montierten Zustand mittels Kupplungen in einem gekoppelten Zustand befinden, wobei das Verfahren den Schritt umfasst aus:
A2. Ineingriffbringen sowohl des ersten Flansches (F1) des ersten Teils (C1) als auch des zweiten Flansches (F2) des zweiten Teils (C2) der geflanschten mechanischen Vorrichtungen mittels einer Montage-/Demontagevorrichtung (1), die zumindest durch einen ersten (51) und einen zweiten (52) Haltearm bereitgestellt wird, durch Blockieren der Vorrichtung (1) auf dem ersten und dem zweiten Flansch (F1, F2) zumindest mittels des zweiten Haltearms (52),
B2. Lösen der Kupplung zwischen dem ersten und dem zweiten Flansch (F1, F2), Freigeben mindestens eines Sitzes für jede Kupplung in dem ersten und dem zweiten Flansch (F1, F2) und Einsetzen eines Stiftes (4) der Montage/Demontagevorrichtung (1) in den Sitz,
C2. im Wesentlichen gleichzeitig Lösen des zweiten (52) Haltearms von dem zweiten Flansch (F2) und Ineingriffbringen des ersten Flansches (F1) mit den ersten (51) Haltearmen, während der zweite Arm (52) in Kontakt mit dem zweiten Flansch (F2) gehalten wird, bis zumindest der erste Arm (51) mit dem ersten Flansch (F1) in Kontakt kommt.

12. Demontageverfahren nach Anspruch 11, wobei der Schritt A2 das Blockieren der Vorrichtung (1) auf dem ersten und zweiten gekoppelten Flansch F1, F2 vorsieht, indem der erste und der zweite Flansch (F1, F2) zwischen dem zweiten Haltearm (52) und einem hinteren Anschlagsektor (21) der Vorrichtung (1) in Eingriff gebracht werden.

13. Verfahren nach einem der Ansprüche 8 bis 12, wobei das Verfahren zumindest teilweise durch eine Montage-/Demontagevorrichtung (1) nach einem der Ansprüche 1 bis 7 betrieben wird.

## Revendications

1. Appareil d'assemblage/désassemblage (1) pour un dispositif mécanique à bride dans lequel l'appareil comprend :
- un corps principal (2) muni d'un secteur de butée arrière (21) ayant au moins un siège (22),
- une broche de couplage (4) logée en partie dans le siège (22) et s'étendant depuis le siège (22) dans une première direction,
- un dispositif de préhension (3) couplé audit corps principal (2),
**caractérisé en ce qu'**un mécanisme d'accrochage (5) est constitué au moins d'un premier (51) et d'un deuxième (52) bras de retenue, lesdits premier (51) et deuxième (52) bras de retenue étant mobiles ensemble au moins entre une première et une deuxième positions, dans lequel, dans ladite première position le premier bras de retenue (51) fait face au secteur de butée arrière (21) alors que dans la deuxième position le deuxième bras de retenue (52) fait face au secteur de butée arrière (21).

2. Appareil d'assemblage/désassemblage (1) selon la revendication précédente, dans lequel lesdits premier (51) et deuxième (52) bras de retenue, sont mobiles ensemble dans une troisième position de sécurité dans laquelle, le premier bras de retenue (51) fait partiellement face au secteur de butée arrière (21) et le deuxième bras de retenue (52) fait partiellement face au secteur de butée arrière (21).

3. Appareil d'assemblage/désassemblage (1) selon les revendications 1 ou 2, dans lequel le mécanisme d'accrochage (5) comprend un arbre de couplage (53) couplé de manière rotative audit corps principal et s'étendant de celui-ci dans ladite première direction, sensiblement parallèle à la broche de couplage (4), lesdits premier (51) et deuxième (52) bras de retenue étant couplés de manière fixe audit arbre de couplage (53) et s'étendant dans une direction radiale de celui-ci à une distance prédéterminée l'un de l'autre.

4. Appareil d'assemblage/désassemblage (1) selon la revendication précédente, dans lequel le mécanisme d'accrochage (5) est un mécanisme à arbre à cames, lesdits premier (51) et deuxième (52) bras de retenue étant des cames.

5. Appareil d'assemblage/désassemblage (1) selon l'une quelconque des revendications précédentes, dans lequel ladite broche de couplage (4) est logée de manière amovible en partie dans le siège (22).

6. Appareil d'assemblage/désassemblage (1) selon l'une quelconque des revendications précédentes, comprenant un dispositif de fixation (25) prévu sur ledit corps principal (2) s'étendant sensiblement perpendiculairement par rapport à ladite broche de couplage (4).

7. Appareil d'assemblage/désassemblage (1) selon l'une quelconque des revendications précédentes, dans lequel ledit corps principal (2) est un corps arqué.

8. Procédé d'assemblage pour des dispositifs mécaniques à bride comprenant une première partie (C1) composée au moins par une première bride (F1) et une deuxième partie (C2) composée au moins par une deuxième bride (F2), le procédé comprenant l'étape consistant à
A1. mettre en prise une première bride (F1) de la première partie (C1) desdits dispositifs mécaniques à bride au moyen d'un appareil d'assemblage/désassemblage (1) pourvu au moins d'un premier (51) et d'un deuxième (52) bras de retenue, par blocage de l'appareil (1) sur ladite première bride (F1) au moins par le biais dudit premier bras de retenue (51),
B1. déplacer une deuxième bride (F2) d'un deuxième boîtier (C1) desdits dispositifs mécaniques à bride vers ladite première bride (F1)
C1. dégager simultanément ledit premier (51) bras de retenue de ladite première bride (F1) et engager ladite deuxième bride (F2) avec lesdits deuxièmes (52) bras de retenue, tout en maintenant ledit premier bras (51) en contact avec ladite première bride (F1) jusqu'à ce qu'au moins ledit deuxième bras (52) vienne en contact avec ladite deuxième bride (F2).

9. Procédé d'assemblage selon la revendication 8, dans lequel l'étape A1 prévoit de bloquer l'appareil (1) sur ladite première bride (F1) en engageant ladite première bride (F1) entre ledit premier bras de retenue (51) et un secteur de butée arrière (21) dudit appareil (1) et en insérant au moins une broche de couplage (4) de l'appareil dans un siège correspondant prévu sur ladite première bride (F1).

10. Procédé d'assemblage selon la revendication 8 ou 9, dans lequel l'étape B1 prévoit le déplacement d'une deuxième bride (F2) essentiellement en butée contre ledit premier bras de retenue (51).

11. Procédé de désassemblage de dispositifs mécaniques à bride comportant une première partie (C1) composée au moins par une première bride (F1) et une deuxième partie (C2) composée au moins par une deuxième bride (F2), en l'état assemblé lesdites première et deuxième brides (F1, F2) étant dans un état accouplé au moyen d'accouplements, le procédé comprenant l'étape consistant à
A2. mettre en prise la première bride (F1) de la première partie (C1) et la deuxième bride (F2) de la deuxième partie (C2) desdits dispositifs mécaniques à bride au moyen d'un appareil d'assemblage /désassemblage (1) muni d'au moins un premier (51) et un deuxième (52) bras de retenue, en bloquant l'appareil (1) sur lesdites première et deuxième brides (F1, F2) au moins par le biais dudit deuxième bras de retenue (52),
B2. retirer ledit accouplement entre lesdites première et deuxième brides (F1, F2), libérer au moins un siège pour chaque accouplement dans les première et deuxième brides (F1, F2) et insérer dans ledit siège une broche (4) de l'appareil d'assemblage/désassemblage (1),
C2. désengager sensiblement simultanément ledit deuxième bras de retenue (52) de ladite deuxième bride (F2) et mettre en prise ladite première bride (F1) avec lesdits premiers (51) bras de retenue, tout en maintenant ledit deuxième bras (52) en contact avec ladite deuxième bride (F2) jusqu'à ce qu'au moins ledit premier bras (51) entrent en contact avec ladite première bride (F1).

12. Procédé de désassemblage selon la revendication 11, dans lequel l'étape A2 prévoit le blocage de l'appareil (1) sur lesdites première et deuxième brides F1, F2 par mise en prise desdites première et deuxième bride (F1, F2) entre ledit deuxième bras de retenue (52) et un secteur de butée arrière (21) dudit appareil (1).

13. Procédé selon l'une quelconque des revendications 8 à 12, dans lequel le procédé est mis en œuvre au moins en partie à travers un appareil d'assemblage/désassemblage (1) selon l'une quelconque des revendications 1 à 7.
